(19) Europäisches Patentamt
European Patent Office
Office européen des brevets

(11) **EP 2 098 392 B1**

(12) **EUROPEAN PATENT SPECIFICATION**

(45) Date of publication and mention
of the grant of the patent:
**01.09.2010 Bulletin 2010/35**

(51) Int Cl.:
*B60H 1/02* *(2006.01)*     *B60H 1/00* *(2006.01)*

(21) Application number: **09003070.1**

(22) Date of filing: **04.03.2009**

(54) **Vehicle heating system**

Fahrzeugheizsystem

Système de chauffage de véhicule

(84) Designated Contracting States:
**DE FR GB IT**

(30) Priority: **04.03.2008 JP 2008053635**

(43) Date of publication of application:
**09.09.2009 Bulletin 2009/37**

(73) Proprietors:
• **Toyota Jidosha Kabushiki Kaisha**
**Toyota-shi, Aichi-ken 471-8571 (JP)**
• **DENSO CORPORATION**
**Kariya-city, Aichi-pref., 448-8661 (JP)**
Designated Contracting States:
**DE FR GB**

(72) Inventors:
• **Kato, Yasushi**
**c/o Toyota Jidosha Kabushiki Kaisha**
**Toyota-shi,**
**Aichi-ken, 471-8571 (JP)**

• **Goto, Takaaki**
**c/o Toyota Jidosha Kabushiki Kaisha**
**Toyota-shi,**
**Aichi-ken, 471-8571 (JP)**
• **Suzuki, Shinji**
**c/o Toyota Jidosha Kabushiki Kaisha**
**Toyota-shi,**
**Aichi-ken, 471-8571 (JP)**
• **Kamada, Takayuki**
**c/o Denso Corporation**
**Kariya-City**
**Aichi-Pref, 448-8661 (JP)**

(74) Representative: **Winter, Brandl, Fürniss, Hübner,**
**Röss, Kaiser, Polte - Partnerschaft**
**Bavariaring 10**
**80336 München (DE)**

(56) References cited:
**EP-A- 1 571 022     EP-A- 1 609 638**
**US-A1- 2007 209 612**

**Description**

BACKGROUND OF THE INVENTION

1. Field of the Invention

The invention relates to a vehicle heating system that heats a passenger compartment by heated air generated using a coolant of an internal combustion engine.

2. Description of the Related Art

In a vehicle equipped with an internal combustion engine (hereinafter, referred to as engine) as a driving source for driving the vehicle, when the engine is idling (while the engine is driven at a minimum rotational speed; hereinafter, referred to as idle state), for example, at the time when the vehicle stops temporarily, the engine is stopped to execute engine control, such as economy running control or idle stop control (hereinafter, collectively referred to as economy running control), for reducing fuel consumption (improving fuel economy) and reducing emissions.

In addition, a vehicle driven by the engine heats the passenger compartment using an engine coolant (for example, water; hereinafter, referred to as coolant). In a heating system (hereinafter, referred to as air conditioner), such as an air conditioning system, that heats the passenger compartment using a coolant, heat exchange takes place between air and the coolant heated by the engine to heat the air. Thus, conditioned air at a predetermined temperature is generated, and then the generated conditioned air blows out into the passenger compartment through an air outlet port, such as a foot air outlet port. Such an air conditioner is, for example, known from EP 1571022, which is considered as the closest prior art.

Such an air conditioner is, for example, described in Japanese Patent Application Publication No. 1-223013 (JP-A-1-223013), which suggests that selection of a heating or cooling mode, selection of an air outlet port, adjustment of outlet air volume, or the like, is performed on the basis of a temperature at an air outlet port, detected by a temperature sensor provided at the air outlet port, and a set temperature.

In some air conditioners that not only heat the passenger compartment but also cool the passenger compartment, a compressor is driven by the engine and, therefore, cooling power decreases when the engine stops. In this state, for example, Japanese Patent Application Publication No. 10-246131 (JP-A-10-246131) suggests that a post-evaporation temperature is detected and, when the post-evaporation temperature is lower than or equal to a predetermined temperature, cancellation of engine start is allowed.

Incidentally, the temperature of the coolant (coolant temperature) decreases when the engine is stopped, and then the heating power of the air conditioner decreases with the decrease in coolant temperature. For this reason, in the vehicle over which the economy running control is executed, the heating power decreases when the engine is stopped. This decreases the temperature of conditioned air blowing out into the passenger compartment, and possibly makes a passenger feel uncomfortable.

In this state, for example, Japanese Patent Application Publication No. 2001-263123 (JP-A-2001-263123) suggests that, in the vehicle over which the economy running control is executed, an idle stop coolant temperature is calculated on the basis of a compartment temperature, an outside air temperature and a set temperature when the vehicle compartment is air-conditioned, and, when the coolant temperature is higher than or equal to the idle stop temperature, the engine is allowed to stop.

In addition, for example, Japanese Patent Application Publication No. 2002-211238 (JP-A-2002-211238) suggests that, when the stop of the engine is prohibited or allowed on the basis of the coolant temperature, a hysteresis width is set for the threshold of the coolant temperature and the threshold is made variable to suppress a decrease in heating power when the economy running control is executed.

Furthermore, for example, Japanese Patent Application Publication No. 2001-341515 (JP-A-2001-341515) suggests that, if a blower fan is operating when energy saving is sought by automatically stopping the engine, it is determined, on the basis of an outside air temperature, an outlet air temperature and an inlet air temperature, whether it is necessary to perform heating, cooling or dehumidification to thereby allow or prohibit an idle stop.

However, when the temperature of the engine coolant is used as a reference, actually, there may be cases where the stop of the engine is prohibited despite heating power that does not make a passenger feel that it is not warm enough or the engine remains stopped despite heating power that makes a passenger to feel that it is not warm enough.

SUMMARY OF THE INVENTION

The invention provides a vehicle heating system that does not make a passenger feel that it is not warm enough while preventing an internal combustion engine from being started unnecessarily during the economy running control, in which the internal combustion engine is stopped when a condition for stopping the internal combustion engine is satisfied, to improve fuel economy and reduce emissions.

A first aspect of the invention provides a vehicle heating system. The vehicle heating system is provided for a vehicle that is equipped with an internal combustion engine as a driving source for driving the vehicle and that includes internal combustion engine control means that stops the internal combustion engine when a predetermined stop condition is satisfied and starts the internal combustion engine when a start condition is satisfied or on the basis of a start request. The vehicle heating system blows out heating air, heated using a coolant of the internal combustion engine, through an air outlet port to heat a passenger compartment. The vehicle heating system includes: outlet air temperature detecting means that detects an outlet air temperature, which is a temperature of the heating air that blows out through the air outlet port; first setting means that detects an outlet air temperature using the outlet air temperature detecting means at least at the time when the internal combustion engine stops, and that sets a first reference temperature that is lower by a predetermined allowable temperature than the detected outlet air temperature; and start request means that issues the start request for starting the internal combustion engine to the internal combustion engine control means when the outlet air temperature detected while the internal combustion engine is stopped is lower than the set first reference temperature.

With the above configuration, the outlet air temperature is detected by the outlet air temperature detecting means at least at the time when the internal combustion engine stops, and the first reference temperature is set on the basis of the detected outlet air temperature and the allowable temperature. In addition, the start request means issues the start request for starting the internal combustion engine when the outlet air temperature detected while the internal combustion engine is stopped is lower than the first set temperature.

Thus, the internal combustion engine is started to increase the outlet air temperature, and it is possible to reliably prevent a passenger from feeling uncomfortable.

The vehicle heating system may further include outside air temperature detecting means that detects an outside air temperature, which is a temperature outside the vehicle; and second setting means that sets a second reference temperature on the basis of the detected outside air temperature, wherein the start request means may issue the start request for starting the internal combustion engine when the detected outlet air temperature is lower than the lower one of the first reference temperature and the second reference temperature.

With the above configuration, the second reference temperature is set on the basis of the detected outside air temperature. At this time, the second reference temperature may be set to a lower limit value of an outlet air temperature (lowest outlet air temperature) at which a passenger does not feel uncomfortable.

The start request means uses the lower one of the first reference temperature and the second reference temperature as a reference temperature and issues the start request for starting the internal combustion engine when the outlet air temperature is lower than the reference temperature. Thus, it is possible to reliably suppress a situation that the internal combustion engine is unnecessarily started. That is, it is possible to extend a duration during which the internal combustion engine is stopped.

The first setting means may set the first reference temperature on the basis of a maximum outlet air temperature, which is a maximum temperature of the detected outlet air temperature during a period in which the internal combustion engine is stopped, including the time when the internal combustion engine stops.

With the above configuration, the first reference temperature is set on the basis of the maximum outlet air temperature, which is the maximum temperature of the outlet air temperature during a period in which the internal combustion engine is stopped, including the time when the internal combustion engine stops. Thus, even when a delay in detection occurs in the outlet air temperature detecting means, it is possible to appropriately set the first reference temperature.

Furthermore, the first reference temperature is set on the basis of the highest outlet air temperature detected while the internal combustion engine is stopped from the time when the internal combustion engine stops. Thus, it is possible to suppress a situation that a passenger feels that it is not warm enough.

The first setting means may set the first reference temperature so that the allowable temperature is increased as the outlet air temperature used for setting the first reference temperature increases.

With the above configuration, the allowable temperature is increased as the outlet air temperature increases to thereby decrease the first reference temperature with respect to the outlet air temperature. Thus, it is possible to prevent a situation that the internal combustion engine is started despite a high outlet air temperature or a situation that the internal combustion engine is not started despite a low outlet air temperature.

A second aspect of the invention provides a method of heating a passenger compartment by blowing out heating air, heated by a coolant of an internal combustion engine, through an air outlet port, wherein the internal combustion engine is stopped when a predetermined stop condition is satisfied, and the internal combustion engine is started when a start condition is satisfied or on the basis of a start request. The method includes the steps of: detecting an outlet air temperature, which is a temperature of the heating air that blows out through the air outlet port; detecting the outlet air temperature at least at the time when the internal combustion engine stops and then setting a first reference temperature that is lower by a predetermined allowable temperature than the detected outlet air temperature; and issuing the start request for starting the internal combustion engine to the internal combustion engine control means when the outlet air temperature detected while the internal combustion engine is stopped is lower than the set first reference temperature.

As described above, according to the aspects of the invention, the first reference temperature is set on the basis of the outlet air temperature at least at the time when the internal combustion engine stops, and the start request for starting the internal combustion engine is issued when the outlet air temperature is lower than the first reference temperature. Thus, it is advantageous in that the internal combustion engine is not unnecessarily started and also it is possible to prevent a passenger from feeling that it is not warm enough.

## BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:

FIG. 1 is a schematic configuration of a relevant portion of an air conditioner, which serves as a vehicle heating system, according to an embodiment;
FIG 2 is a schematic configuration diagram of a relevant portion that shows a coolant circulation system;
FIG. 3 is a block diagram that shows a relevant portion of a control system of the air conditioner and an engine;
FIGs. 4A and 4B show a flowchart that schematically shows an engine start request control;
FIG. 5 is a flowchart that shows an example of setting a maximum outlet air temperature;
FIG 6A is a chart that schematically shows setting and resetting of an outside air temperature flag;
FIG. 6B is a map that shows an example of an engine start request coolant temperature versus an outside air temperature;
FIG 7 is a chart that shows an example of an outlet air temperature at the time when the engine stops and a variation in outlet air temperature detected by an outlet air temperature sensor;
FIG. 8A is a map that shows an example of a start request temperature based on an outside air temperature; and
FIG 8B is a map that shows an example of a start request temperature versus a maximum outlet air temperature.

## DETAILED DESCRIPTION OF EMBODIMENTS

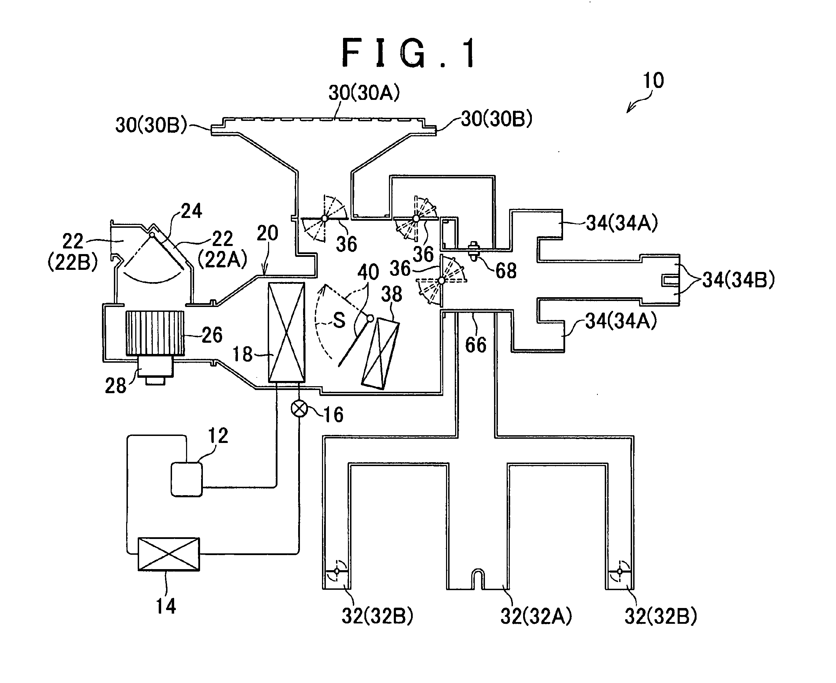

Hereinafter, an embodiment of the invention will be described with reference to the accompanying drawings. FIG 1 shows the schematic configuration of a vehicle air conditioning system (hereinafter, referred to as air conditioner 10), which serves as a vehicle heating system, according to the present embodiment.

The air conditioner 10 has a refrigeration cycle in which a refrigerant is circulated. The refrigeration cycle is formed of a compressor 12, a condenser 14, an expansion valve 16 and an evaporator 18. In the air conditioner 10, a refrigerant is compressed by the compressor 12 being driven for rotation, the obtained high-temperature and high-pressure refrigerant is transferred to the condenser 14, and then cooled and liquefied.

The liquefied refrigerant is fed to the evaporator 18 and then evaporated. At this time, in the evaporator 18, heat exchange takes place between the refrigerant to be evaporated and air that passes through the evaporator 18. Thus, in the air conditioner 10, the air that passes through the evaporator 18 is cooled and dehumidified. The expansion valve 18 steeply reduces the pressure of the refrigerant fed to the evaporator 18 to form the misty refrigerant to thereby improve the vaporization efficiency of the refrigerant at the evaporator 18 (cooling efficiency at the evaporator 18).

The air conditioner 10 includes an air conditioner unit 20 in which a passage of conditioned air is formed. The evaporator 18 is arranged inside the air conditioner unit 20. In addition, the air conditioner unit 20 has air introducing ports 22 formed at one end of the passage of conditioned air, and outlet ports of conditioned air are connected to the other end of the air conditioner unit 20.

The air conditioner 10 has set an inside air circulating mode and an outside air introducing mode as an air introducing mode. Air inside the passenger compartment is introduced in the inside air circulating mode. Outside air is introduced in the outside air introducing mode. The air conditioner unit 20 has an inside air introducing port 22A and an outside air introducing port 22B as the introducing ports 22. The inside air introducing port 22A is open to the passenger compartment. The outside air introducing port 22B is open to the outside of the passenger compartment. In addition, the air conditioner unit 20 is provided with a switching door 24 and a blower fan 26. The switching door 24 opens or closes the inside air introducing port 22A and the outside air introducing port 22B.

In the air conditioner 10, in accordance with the air introducing mode, the switching door 24 is actuated to open or close the inside air introducing port 22A and the outside air introducing port 22B, and air introduced from the introducing port 22 (the inside air introducing port 22A or the outside air introducing port 22B) to the evaporator 18 by the blower fan 26 that is driven for rotation by a blower motor 28.

The air conditioner 10 has defroster air outlet ports 30 (for example, a center defroster air outlet port 30A and side defroster air outlet ports 30B), register air outlet ports 32 (for example, center register air outlet ports 32A and side register air outlet ports 32B) and foot air outlet ports 34 (for example, front seat foot air outlet ports 34A that are open to spaces around the feet of passengers on the front seat, and rear seat foot air outlet ports 34B that are open to spaces around the feed of passengers on the rear seat), as air outlet ports of conditioned air. The defroster air outlet ports 30 are open toward windshield glasses (not shown). The register air outlet ports 32 are open toward passengers inside the passenger compartment. The foot air outlet ports 34 are open toward the feet of passengers.

The air conditioner unit 20 includes mode switching doors 36. The mode switching doors 36 are respectively in fluid communication with the defroster air outlet ports 30, the register air outlet ports 32 and the foot air outlet ports 34, and respectively open or close the defroster air outlet ports 30, the register air outlet ports 32 and the foot air outlet ports 34.

The air conditioner 10 has set a DEF mode, a FACE mode, a FOOT mode, a FOOT/DEF mode and a BI-LEVEL mode, as outlet modes of conditioned air. Conditioned air blows out through the defroster air outlet ports 30 in the DEF mode. Conditioned air blows out through the register air outlet ports 32 in the FACE mode. Conditioned air blows out through the foot air outlet ports 34 in the FOOT mode. Conditioned air blows out through the defroster air outlet ports 30 and the foot air outlet ports 34 in the FOOT/DEF mode. Conditioned air blows out through the register air outlet ports 32 and the foot air outlet port 34 in the BI-LEVEL mode. In the air conditioner 10, once the outlet mode is set, the mode switching doors 36 are actuated on the basis of the set outlet mode, and conditioned air blows out through the air outlet ports based on the air outlet mode.

In addition, the air conditioner unit 20 includes a heater core 38 and an air mix door 40. In the air conditioner 10, air that passes through the evaporator 18 can pass through the heater core 38, and the air that passes through the heater core 38 is heated by the heater core 38.

In the air conditioner 10, heated air passing through the heater core 38 is mixed with air bypassing the heater core 38 to generate conditioned air. At this time, the air conditioner 10 controls the amount of air passing through the heater core 38 and the amount of air bypassing the heater core 38 by the opening degree S of the air mix door 40 to generate conditioned air at a desired temperature. Thus, the opening degree S of the air mix door 40 is increased to generate heated air that heats the passenger compartment as conditioned air.

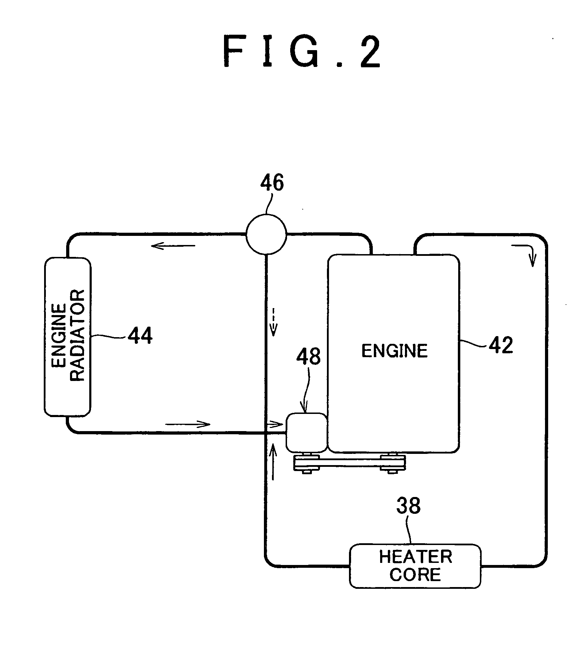

On the other hand, as shown in FIG 2, a vehicle equipped with the air conditioner 10 includes an engine 42 as an internal combustion engine, and the engine 42 is driven for driving the vehicle. The engine 42 is a typical water-cooled internal combustion engine that uses water (hereinafter, referred to as coolant) as an engine coolant.

The vehicle has a coolant circuit formed of an engine radiator 44, a thermostat 46 and a water pump 48 to circulate coolant between the engine 42 and the engine radiator 44. In the present embodiment, the water pump 48 is driven by the engine 42 for rotation, and the water pump 48 is driven for rotation to circulate coolant between the engine 42 and the engine radiator 44.

Air present in front of the vehicle is introduced to the engine radiator 44 as the vehicle runs or as a cooling fan (not shown) operates. In the engine radiator 44, heat exchange takes place between the air and the coolant to cool the coolant, and the coolant is circulated back to the engine 42. Thus, it is possible to suppress an increase in temperature of the engine 42 due to exhaust heat.

The thermostat 46 opens or closes the passage of the coolant to the engine radiator 44 on the basis of a temperature of the coolant (coolant temperature) to maintain the coolant temperature within a predetermined temperature range while the engine 42 is in operation. That is, when the coolant temperature Tw is higher than a predetermined temperature $T_1$, the thermostat 46 fully opens the passage of the coolant to the engine radiator 44 to facilitate cooling of the coolant. In addition, when the coolant temperature Tw is lower than the temperature $T_1$, the thermostat 46 gradually narrows the passage to the engine radiator 44 and, when the coolant temperature Tw reaches a temperature $T_2$ ($T_1 > T_2$), closes the passage to the engine radiator 44 to suppress cooling of the coolant. Thus, while the engine 44 is in operation, the coolant temperature Tw is maintained at a predetermined temperature Ts within the range from the temperature $T_1$ to the temperature $T_2$ ($T_2 < Ts < T_1$). Note that it is only necessary that the vehicle includes an internal combustion engine as a driving source for driving the vehicle, and the vehicle is not limited to a so-called conventional vehicle that runs only by driving force of an internal combustion engine. Instead, the vehicle may be a hybrid vehicle that is equipped with an electric motor in addition to an internal combustion engine.

On the other hand, the coolant of the engine 42 is circulated to the heater core 38 of the air conditioner 10 as the water pump 48 is driven. In the air conditioner 10, the coolant is circulated to the heater core 38 to cause heat exchange to take place between air passing through the heater core 38 and the coolant. Thus, in the air conditioner 10, air is heated by the heater core 38.

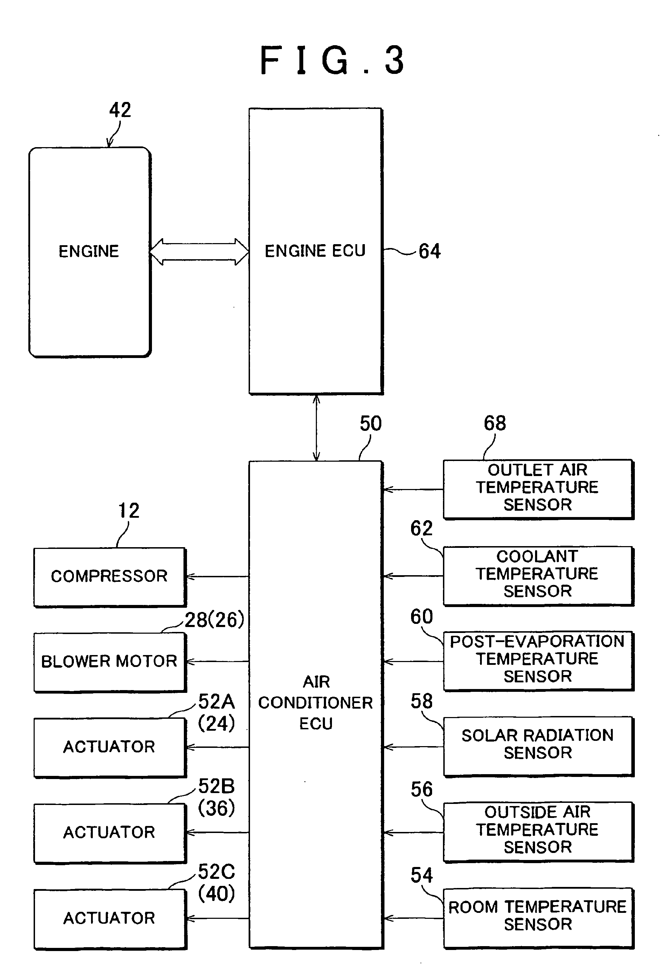

As shown in FIG 3, the air conditioner 10 includes an air conditioner ECU 50 that controls air-conditioning operation. The air conditioner ECU 50 has a typical configuration including a microcomputer in which a CPU, a ROM, a RAM, and the like, are connected through a bus, various input/output interfaces and various driving circuits (all of which are not shown).

The compressor 12 is connected to the air conditioner ECU 50. The air conditioner ECU 50 controls the refrigerant discharge capacity of the compressor 12 on the basis of a cooling load. Note that the compressor 12 may be the one that is driven by the engine 42 for rotation or may be the one that is driven for rotation by an electric motor (compressor motor).

The blower motor 28 is connected to the air conditioner ECU 50. The air conditioner ECU 50 controls the volume of conditioned air supplied (blower volume) in such a manner that the rotational speed of the blower fan 26 is controlled by driving the blower motor 28.

In addition, the air conditioner ECU 50 is connected to an actuator 52A that actuates the switching door 24, an actuator 52B that actuates the mode switching doors 36, and an actuator 52C that actuates the air mix door 40. The air conditioner ECU 50 actuates the actuators 52A and 52B on the basis of the air introducing mode and the conditioned air outlet mode, and actuates the actuator 52C so as to obtain the conditioned air that makes the passenger compartment at a set temperature.

The air conditioner ECU 50 is connected to a room temperature sensor 54, an outside air temperature sensor 56, a solar radiation sensor 58, a post-evaporation temperature sensor 60, a coolant temperature sensor 62, and the like. The room temperature sensor 54 detects a temperature in the passenger compartment (compartment temperature Tr). The outside air temperature sensor 56 detects a temperature outside the vehicle (outside air temperature To). The solar radiation sensor 58 detects a solar radiation ST. The post-evaporation temperature sensor 60 detects a temperature of air that has passed through the evaporator 18 (post-evaporation temperature Te). The coolant temperature sensor 62 detects a temperature Tw of the coolant of the engine 42, that passes through the heater core 38.

When the operating condition, such as a set temperature, is set by operating a switch of an operating panel (not shown), the air conditioner ECU 50 detects the environmental condition and operation state by those sensors, and performs air-conditioning operation so that the passenger compartment is at the set temperature on the basis of the operating condition, the environmental condition and the operating state.

At this time, the air conditioner ECU 50, for example, sets a target outlet air temperature $T_{AO}$, which is a temperature of conditioned air necessary to make the passenger compartment at a set temperature $T_{SET}$. The target outlet air temperature $T_{AO}$ may be calculated by a known typical arithmetic expression.

$$T_{AO} = K_1 \cdot T_{SET} - K_2 \cdot To - K_3 \cdot Tr - K_4 \cdot ST + C$$

(where $K_1$ to $K_4$ and C are predetermined constants)

The air conditioner ECU 50 controls the opening degree of the air mix door 40 on the basis of the target outlet air temperature $T_{AO}$. In addition, when air-conditioning operation in an automatic mode is set, the air conditioner ECU 50 sets the blower volume, conditioned air outlet mode, and the like, on the basis of the target outlet air temperature $T_{AO}$.

For example, the compartment temperature Tr, the set temperature $T_{SET}$, or the like, is used as a reference temperature, and the blower volume is set on the basis of a difference between the reference temperature and the target outlet air temperature $T_{AO}$. At this time, the blower volume is reduced when the difference between the reference temperature and the target outlet air temperature $T_{AO}$ is small, and the blower volume is increased as the difference between the reference temperature and the target outlet air temperature $T_{AO}$ increases.

Generally, the conditioned air outlet mode is set to the FACE mode when in a heating mode in which the set temperature $T_{SET}$ or the target outlet air temperature $T_{AO}$ is lower than the compartment temperature Tr, and is set to the FOOT mode or the BI-LEVEL mode when in a heating mode in which the set temperature $T_{SET}$ or the target outlet air temperature $T_{AO}$ is higher than the compartment temperature Tr.

The air conditioner ECU 50 performs air-conditioning operation that makes the passenger compartment at the set temperature $T_{SET}$ on the basis of the thus set operating condition. Note that the basic configuration of an air-conditioning control executed by the air conditioner ECU 50 may employ a known configuration, so the detailed description thereof is omitted here.

On the other hand, the vehicle is provided with an engine ECU 64 that controls the engine 42. The engine ECU 64 has a typical configuration including a microcomputer in which a CPU, a ROM, a RAM, and the like, are connected through a bus, various input/output interfaces and various driving circuits (all of which are not shown). The engine ECU 64 detects a driving operation condition, running environment, running state, and the like, of the vehicle through various sensors, and the like (not shown), and controls the engine 42 so as to drive the vehicle appropriately. At this time, the engine ECU 64 applied to the present embodiment executes economy running control such that the engine 42 is started when a predetermined engine start condition is satisfied and the engine 42 is stopped when a predetermined engine stop condition is satisfied.

Thus, the vehicle, for example, performs an idle stop in which the engine 42 is stopped when the vehicle is not running (the vehicle speed is zero). The engine ECU 64 executes the economy running control over the engine 42 to improve fuel economy and suppress noise and emissions. Note that the basic configuration of a driving control of the engine 42, executed by the engine ECU 64, may employ a known typical configuration, so the detailed description thereof is omitted here.

Incidentally, when the engine ECU 64 receives a request for starting the engine 42 (engine start request) from the air conditioner ECU 50 while the engine 42 is stopped in a state where the engine stop condition is satisfied (economy running), the engine ECU 64 starts the engine 42 on the basis of the engine start request.

The air conditioner 10 has an outlet air temperature sensor 68, which serves as outlet air temperature detecting means, in a duct 66 at which the foot air outlet ports 34 are formed. Conditioned air blows out through the foot air outlet ports 34 when air-conditioning operation is performed in a heating mode.

Generally, when air-conditioning operation is performed in the heating mode, conditioned air mainly blows out through the foot air outlet ports 34. This provides a comfortable heating feeling. In this state, when air-conditioning operation is performed in the heating mode, the outlet air temperature sensor 68 detects a temperature of conditioned air that blows out through the foot air outlet ports 34. Note that the outlet air temperature sensor 68 may be provided at a selected location as long as the outlet air temperature sensor 68 is able to detect the temperature of conditioned air that blows out into the passenger compartment when air-conditioning operation is performed in the heating mode.

As shown in FIG 3, the outlet air temperature sensor 68 is connected to the air conditioner ECU 50. The air conditioner ECU 50 detects the temperature of conditioned air that blows out through the foot air outlet ports 34 (hereinafter, referred to as outlet air temperature Ta) by the outlet air temperature sensor 68.

The air conditioner ECU 50 sets the opening degree S of the air mix door 40 on the basis of the coolant temperature Tw detected by the coolant temperature sensor 62, and actuates the actuator 52C so as to obtain the set opening degree S.

For example, where the ratio of the volume of air passing through the heater core 38 to the volume of all the air (blower volume) is expressed as the mixing ratio r, the opening degree S of the air mix door 40 is obtained from a mixing ratio r. The mixing ratio r is obtained from the post-evaporation temperature Te, the temperature of air passing through the heater core 38 (post-heater core temperature Th) and the target outlet air temperature $T_{AO}$.

$$r = (T_{AO} - Te)/(Th - Te)$$

At this time, the post-evaporation temperature Te may be detected by the post-evaporation temperature sensor 60, and the post-heater core temperature Th may be detected by providing a temperature sensor downstream of the heater core 38. In addition, the post-heater core temperature Th may be obtained on the basis of the temperature Tw and flow rate (the rotational speed of the water pump 48, that is, the rotational speed of the engine 42) of coolant supplied to the heater core 38 and the temperature efficiency that is determined depending on the heater core 38. In the air conditioner 10, when the opening degree S of the air mix door 40 is maximal, cooling power is maximal at the coolant temperature Tw at that moment.

On the other hand, while the engine 42 is stopped, a decrease in coolant temperature occurs to no small extent. The heating power of the air conditioner 10 decreases as the coolant temperature Tw decreases. Therefore, even when the air mix door 40 is set to the maximum opening degree, conditioned air of a temperature that gives the target outlet air temperature $T_{AO}$ cannot be obtained. Thus, a passenger may feel that it is not warm enough.

Here, while the engine 42 is stopped, the air conditioner ECU 50 determines a variation in heating power on the basis of the outlet temperature Ta of conditioned air detected by the outlet air temperature sensor 68 during heating operation and then issues a request for starting the engine 42, thus preventing a passenger from feeling that it is not warm enough.

At this time, the air conditioner ECU 50 determines, on the basis of the outside air temperature To detected by the outside air temperature sensor 56, whether the environmental state (outside air temperature) needs heating in the passenger compartment.

The air conditioner ECU 50 has a set lower limit value of the coolant temperature Tw with respect to the outside air temperature To (hereinafter referred to as reference temperature Tso) when the stop of the engine 42 is allowed, as a second reference temperature.

In addition, the air conditioner ECU 50 detects the maximum temperature of the outlet air temperature Ta (maximum outlet air temperature Tamax) after the stop of the engine (economy running) is started, and sets the lower limit value of the outlet air temperature Ta (hereinafter, referred to as reference temperature Tsa) when the stop of the engine is allowed on the basis of the maximum outlet air temperature Tamax, as a first reference temperature. The reference temperature Tsa is set at a temperature that is lower by a predetermined allowable temperature $\Delta T$ than the maximum outlet air temperature Tamax.

When the economy running (stop of the engine) is started, the air conditioner ECU 50 sets the lower one of the reference temperatures Tso and Tsa to the reference temperature Taf at which an engine start request is issued on the basis of the outlet air temperature Ta. When the outlet temperature Ta of conditioned air detected by the outlet air temperature sensor 68 is lower than the reference temperature Taf, the air conditioner ECU 50 issues an engine start request to the engine ECU 64.

Thus, when the engine 42 is started, the coolant is heated by the engine 42, and an increase in heating power is achieved by the heated coolant being circulated to the heater core 38.

Hereinafter, maintaining the heating power in such a manner that the air conditioner 10 (air conditioner ECU 50) issues an engine start request will be described as an operation of the present embodiment.

When the air conditioner ECU 50 provided in the air conditioner 10 receives an instruction for starting the air-conditioning operation, the air conditioner ECU 50 loads the operating condition, such as the set temperature $T_{SET}$, and the environmental condition, such as the compartment temperature Tr and the outside air temperature To, and then sets the target outlet air temperature $T_{AO}$, which makes the passenger compartment at the set temperature, on the basis of the operating condition, the environmental condition and the operating state.

In addition, the air conditioner ECU 50 sets the introducing mode, the blower volume and the air outlet mode on the basis of the operating condition input from the operating panel or the operating condition set on the basis of the target outlet air temperature $T_{AO}$, and then starts air-conditioning operation so that conditioned air blows out at the target outlet air temperature $T_{AO}$. That is, the air conditioner ECU 50 controls the opening degree S of the air mix door 40 to make the passenger compartment at the set temperature $T_{SET}$, thus performing air-conditioning operation.

On the other hand, when an ignition switch (not shown) is turned on and then the vehicle starts running, the engine ECU 64 detects the driving operation condition, the running environment, the operating state, and the like, and then executes driving control over the engine 42 on the basis of the detected information. Thus, the vehicle runs in response to passenger's driving operation.

At this time, when the predetermined engine stop condition is satisfied, the engine ECU 64 executes economy running in which the engine 42 is stopped to thereby improve fuel economy and suppress noise and emissions.

Incidentally, by executing economy running in which the engine 42 is stopped, circulation of the coolant to the heater core 38 stops and, therefore, the heating power of the air conditioner 10 decreases. If the heating power of the air conditioner 10 excessively decreases, the temperature of conditioned air that blows out into the passenger compartment (outlet air temperature Ta) decreases. This may make a passenger feel uncomfortable.

In this state, when the heating power decreases, the air conditioner ECU 50 issues a request for starting the engine 42 at an appropriate timing, thus preventing the passenger from feeling uncomfortable.

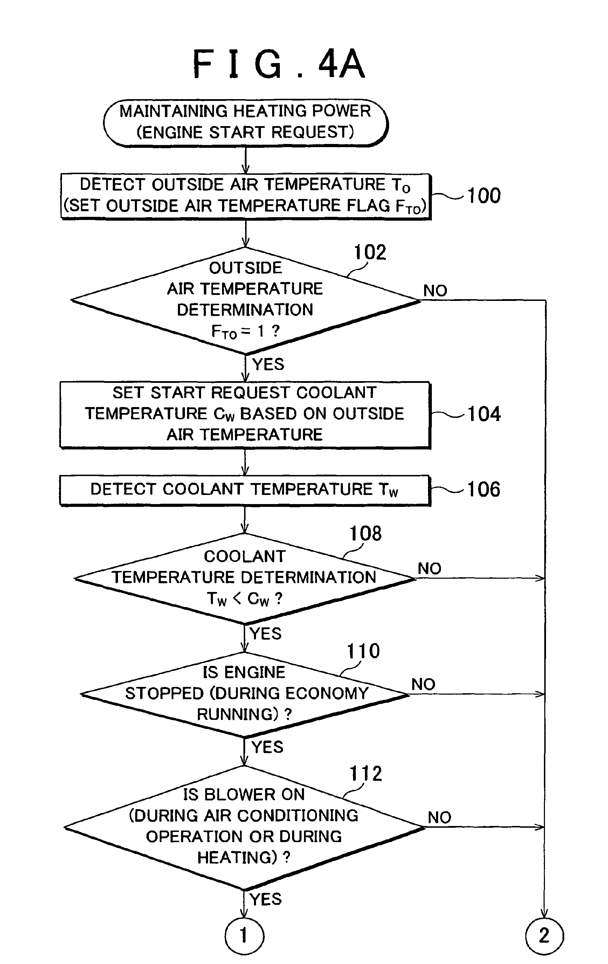

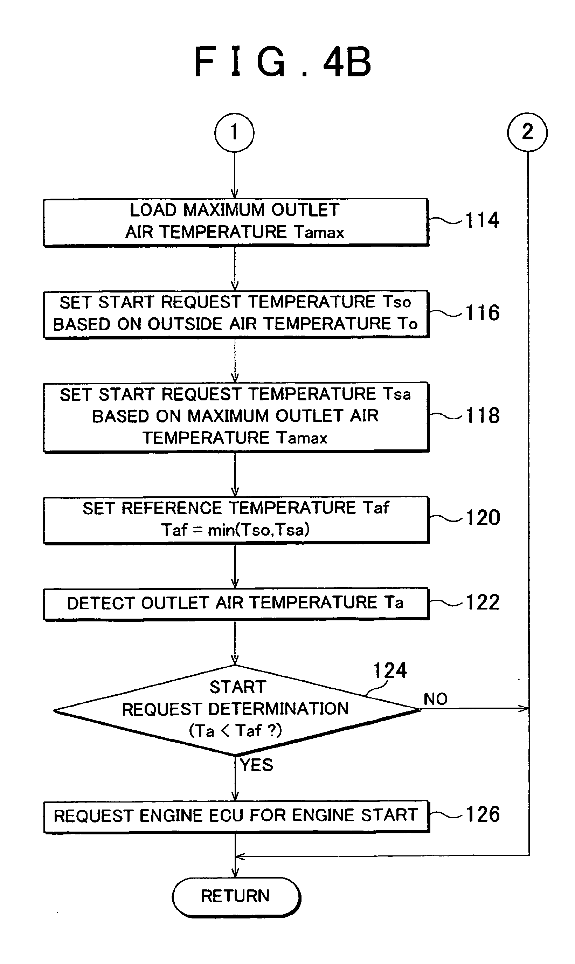

Here, the process in the air conditioner ECU 50 will be described with reference to FIGs. 4A to FIG. 8B. FIGs. 4A and 4B schematically show the process when the heating power is maintained within the range in which a passenger does not feel uncomfortable. This flowchart is executed at predetermined time intervals when the ignition switch (not shown) of the vehicle is turned on, and the vehicle starts traveling. In the first step 100, the outside air temperature To, which is the temperature outside the vehicle, is detected by the outside air temperature sensor 56, and then, in step 102, it is determined, on the basis of the detected outside air temperature To, whether it is an environment under which the passenger compartment needs heating.

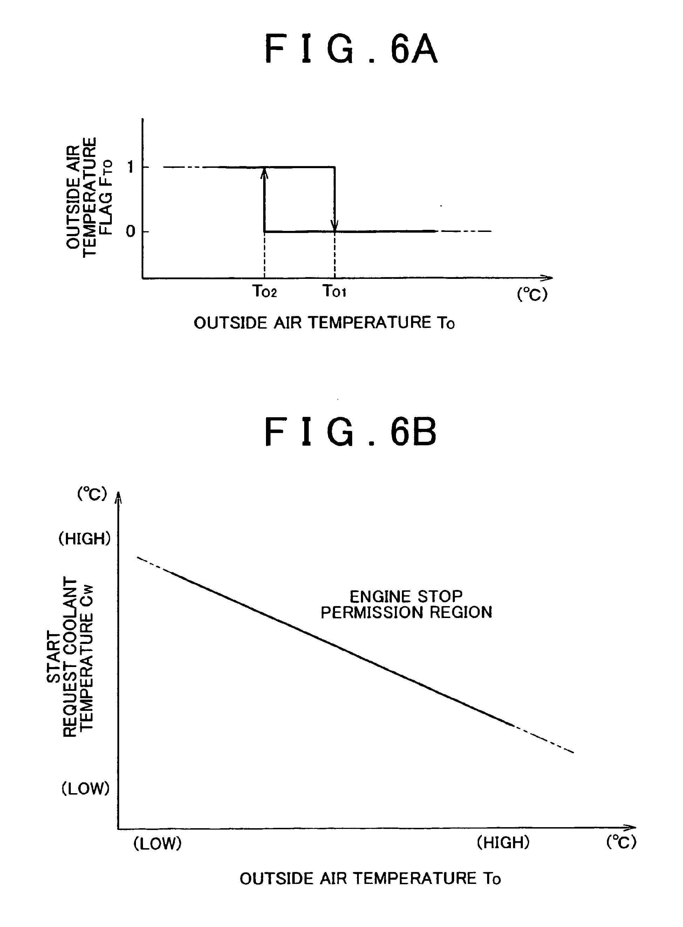

FIG. 6A schematically shows an outside air temperature flag $F_{TO}$ used for the above determination. The outside air temperature flag $F_{TO}$ is set ($F_{TO}$ = 1) when the outside air temperature To decreases to a temperature $To_2$, and is reset ($F_{TO}$ = 0) when the outside air temperature To increases to a temperature $To_1$. Here, hysteresis is set between the temperatures $To_1$ and $To_2$ so that the temperature $To_1$ is higher than the temperature $To_2$.

The temperatures $To_1$ and $To_2$ at this time employ a typical outside air temperature To at which heating is required, and, for example, may set about 20°C for the temperature $To_1$ and about 15°C for the temperature $To_2$. By so doing, in a state where the outside air temperature flag $F_{TO}$ is set ($F_{TO}$ = 1), it may be determined that it is the environment under which heating operation of the air conditioner 10 is required.

In the flowchart of FIGs. 4A and 4B, when the outside air temperature To detected by the outside air temperature sensor 56 is in an environmental state where heating operation is required ($F_{TO}$ = 1), affirmative determination is made in step 102, and, in step 104, a start request coolant temperature Cw, at which a request for starting the engine 42 is issued, is set on the basis of the outside air temperature To.

FIG 6B shows an example of a start request coolant temperature Cw versus an outside air temperature To. Generally, the start request coolant temperature Cw is constant irrespective of the outside air temperature To; however, in the present embodiment, as the outside air temperature To increases, the start request coolant temperature Cw is decreased. Thus, when it is assumed that the outside air temperature To is low and, therefore, high heating power is required, the coolant temperature Tw at which a request for starting the engine 42 is issued (start request coolant temperature Cw) is increased. As the outside air temperature To increases, the start request coolant temperature Cw is decreased. This prevents the engine 42 from starting despite a situation that heating power is ensured.

In FIGs. 4A and 4B, when the start request coolant temperature Cw, at which a request for starting the engine 42 is issued, is set on the basis of the outside air temperature To, the coolant temperature Tw inside the heater core 38 is detected by the coolant temperature sensor 62 in step 106, and it is checked in the next step 108 whether the coolant temperature Tw is lower than the start request coolant temperature Cw. Here, when the coolant temperature Tw is lower than the start request coolant temperature Cw (Tw < Cw), affirmative determination is made in step 108.

When the affirmative determination is made in step 108, it is checked in step 110 whether the engine 42 is stopped, that is, the economy running is performed. At this time, when the engine stop condition is satisfied and then the engine 42 is stopped, affirmative determination is made in step 110 to proceed to step 112.

In step 112, it is checked whether the blower motor 28 (blower fan 26) is turned on. That is, in step 112, it is checked whether the air conditioner 10 is performing air-conditioning operation (heating operation).

Here, when the air conditioner 10 is performing air-conditioning operation and the blower fan 26 is turned on, affirmative determination is made in step 112 to proceed to step 114. In step 114, the maximum outlet air temperature Tamax is loaded.

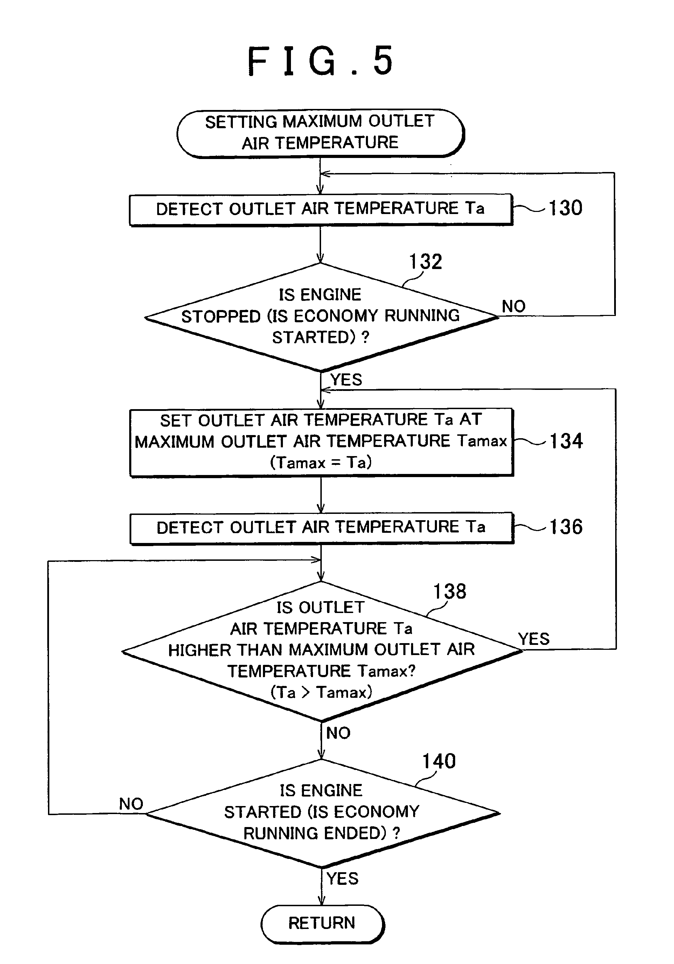

FIG 5 schematically shows the process of setting the maximum outlet air temperature Tamax. This flowchart is executed at predetermined time intervals in parallel with the process of FIGs. 4A and 4B when the air conditioner 10 performs air-conditioning operation. Note that the flowchart of FIG 5 may also be, for example, executed in heating operation (air-conditioning operation in a heating mode), or the like.

In the above flowchart, in the first step 130, the outlet temperature Ta of conditioned air detected by the outlet air temperature sensor 68 is loaded. In addition, in the next step 132, it is checked whether the engine stop condition is satisfied and then the engine 42 is stopped.

Here, when the engine 42 is stopped to start the economy running, affirmative determination is made in step 132 to proceed to step 134. In step 134, the outlet air temperature Ta detected by the outlet air temperature sensor 68 is set to the maximum outlet air temperature Tamax. That is, the outlet air temperature Ta detected by the outlet air temperature sensor 68 at the time when the economy running is started is set as an initial value of the maximum outlet air temperature Tamax.

After that, in step 136, the outlet air temperature Ta detected by the outlet air temperature sensor 68 is loaded, and it is checked in step 138 whether the detected outlet air temperature Ta is higher than the maximum outlet air temperature Tamax. At this time, when the detected outlet air temperature Ta is higher than the maximum outlet air temperature Tamax that has been already set, affirmative determination is made in step 138 to proceed to step 136. Then, the maximum outlet air temperature Tamax is updated in step 136.

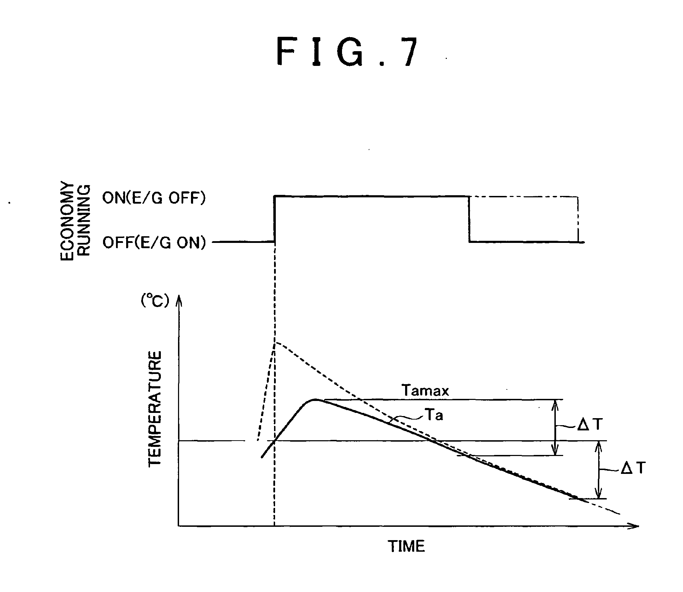

That is, as shown in FIG. 7, when the economy running is started (when the engine shifts from a driving state into a stopped state), an actual temperature of conditioned air (indicated by the broken line in FIG. 7) may steeply increase. At this time, when an increase in temperature of the sensing portion of the outlet air temperature sensor 68 delays, the outlet air temperature Ta output from the outlet air temperature sensor 68 is lower than the actual temperature.

For this reason, when the engine start request is issued at the time when the outlet air temperature Ta decreases by the allowable temperature $\Delta T$ using the outlet air temperature Ta at the time of starting the economy running as a reference, start of the engine 42 delays to thereby make a passenger feel that it is not warm enough.

In contrast, the air conditioner ECU 50 updates the maximum outlet air temperature Tamax (does not fix the outlet air temperature Ta to the initial value) when the outlet air temperature Ta detected by the outlet air temperature sensor 68 increases. Thus, it is possible to appropriately set the maximum outlet air temperature Tamax within the range from the time at which the economy running is started. That is, a request for starting the engine 42 is issued at the time when the outlet air temperature Ta, detected while the engine 42 is stopped, decreases from the maximum outlet air temperature Tamax by the allowable temperature $\Delta T$. Thus, it is possible to start the engine 42 before a passenger feels that it is not warm enough.

Note that in the flowchart of FIG 5, it is checked in step 140 whether the economy running is ended (whether the engine 42 is started), and, when the economy running is ended, affirmative determination is made in step 140 to temporarily end the process of setting the maximum outlet air temperature Tamax.

On the other hand, in the flowchart of FIGs. 4A and 4B, when affirmative determination is made in step 112, the maximum outlet air temperature Tamax set in the process of FIG 5 is loaded in step 114. In addition, in step 116, a start request temperature Tso is set on the basis of the outside air temperature To detected by the outside air temperature sensor 56.

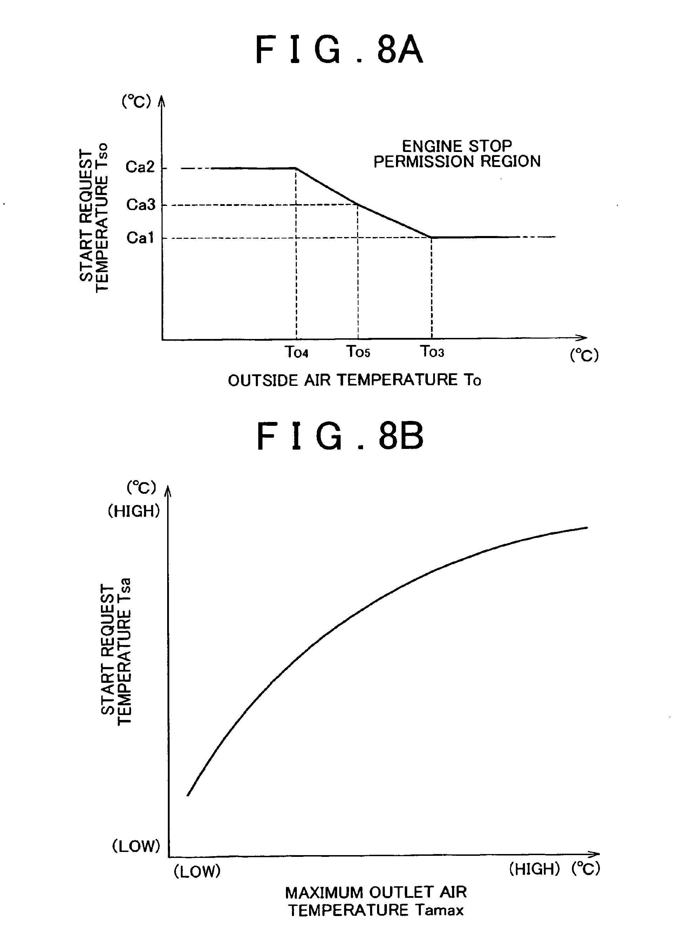

FIG 8A shows an example of the start request temperature Tso based on the outside air temperature To according to the present embodiment. The air conditioner ECU 50 stores a map, corresponding to FIG 8A, of the start request temperature Tso based on the outside air temperature To, and sets the start request temperature Tso on the basis of the outside air temperature To using the map.

The start request temperature Tso is set at a boundary temperature at which a passenger generally feels that it is not warm enough when conditioned air of that temperature blows out. When the outside air temperature To is higher than a temperature $To_3$, the start request temperature Tso is set at a temperature $Ca_1$; however, when the outside air temperature To is a temperature $To_4$ that is lower than the temperature $To_3$, the start request temperature Tso is set at a temperature $Ca_2$ that is higher than the temperature $Ca_1$.

In addition, when the outside air temperature To is a temperature $To_5$ between the temperature $To_4$ and the temperature $To_3$ ($To_4 < To_5 < To_3$), the start request temperature Tso is set to a temperature $Ca_3$ between the temperature $Ca_1$ and the temperature $Ca_2$ ($Ca_1 < Ca_3 < Ca_2$). That is, when the outside air temperature To ranges from the temperature $To_4$ to the temperature $To_3$, the start request temperature Tso decreases as the outside air temperature To increases.

In the flowchart of FIGs. 4A and 4B, the start request temperature Tso based on the outside air temperature To is set in step 116, while a start request temperature Tsa based on the maximum outlet air temperature Tamax is set in step 118.

The start request temperature Tsa may be set as a temperature that is obtained by subtracting a predetermined allowable temperature $\Delta T$ (for example, $\Delta T = 7°C$) from the maximum outlet air temperature Tamax uniformly (Tsa = Tamax - $\Delta T$).

In addition, the start request temperature Tsa is not limited to this. The start request temperature Tsa may be set by changing the allowable temperature $\Delta T$ on the basis of the maximum outlet air temperature Tamax. FIG. 8B shows a start request temperature Tsa versus a maximum outlet air temperature Tamax according to the present embodiment. The air conditioner ECU 50 stores a map corresponding to FIG. 8B.

As shown in FIG 8B, in the present embodiment, the allowable temperature $\Delta T$ is increased as the maximum outlet air temperature Tamax increases. By setting the start request temperature Tsa in this manner, when the maximum outlet air temperature Tamax is low, the allowable temperature $\Delta T$ is reduced to thereby make it possible to prevent the outlet air temperature Ta from excessively decreasing.

In addition, as the maximum outlet air temperature Tamax increases, the allowable temperature $\Delta T$ is increased to thereby make it possible to prevent the engine 42 from starting before the outlet air temperature Ta decreases.

In the flowchart of FIGs. 4A and 4B, when the start request temperatures Tso and Tsa are set, the reference temperature Taf, at which a start request is issued, is set using the outlet air temperature Ta in step 120. The reference temperature Taf employs the lower one of the start request temperature Tso and the start request temperature Tsa.

After that, the outlet air temperature Ta detected by the outlet air temperature sensor 68 is loaded in step 122, and it is checked in step 124 whether the outlet air temperature Ta is lower than the reference temperature Taf.

Here, when heating operation is continued while the engine 42 is stopped, the coolant temperature Tw inside the heater core 38 decreases. Then, when the outlet air temperature Ta that decreases in accordance with the decrease in coolant temperature Tw is lower than the reference temperature Taf (Ta < Taf), affirmative determination is made in step 124 to proceed to step 126.

In step 126, a request for starting the engine 42 is issued to the engine ECU 64. By so doing, when the engine 42 is driven, circulation of the coolant to the heater core 38 is started, while the coolant is heated by the engine 42. As a result, the outlet air temperature Ta, which is a temperature of conditioned air that blows out into the passenger compartment, increases.

In this way, in the air conditioner 10, when a request for starting the engine 42 is issued on the basis of the outlet air temperature Ta, the maximum outlet air temperature Tamax, which is the highest outlet air temperature Ta during engine stop including the time when the engine stops, is used as a reference. Thus, it is possible to prevent the outlet air temperature Ta from excessively decreasing to make a passenger feel that it is not warm enough before issuance of a request for starting the engine 42 because of a delay of detection of the outlet air temperature sensor 68.

In addition, in the present embodiment, when the allowable temperature $\Delta T$ is subtracted from the maximum outlet air temperature Tamax to set the start request temperature Tsa, the allowable temperature $\Delta T$ is increased when the maximum outlet air temperature Tamax is high, while the allowable temperature $\Delta T$ is reduced when the maximum outlet air temperature Tamax is low.

Thus, it is possible to issue a request for starting the engine 42 at an appropriate timing. That is, when a difference between the set temperature $T_{SET}$ and the compartment temperature Tr is large, the target outlet air temperature $T_{AO}$ increases to thereby increase the maximum outlet air temperature Tamax. However, if the allowable temperature $\Delta T$ is constant, there is a possibility that the engine 42 starts despite a high outlet air temperature Ta.

In addition, when a difference between the set temperature $T_{SET}$ and the compartment temperature Tr is small, the target outlet air temperature $T_{AO}$ decreases to thereby decrease the maximum outlet air temperature Tamax. However, at this time, when the allowable temperature $\Delta T$ is constant, there is a possibility that the engine 42 does not start despite a low outlet air temperature Ta.

In contrast, as the maximum outlet air temperature Tamax increases, the allowable temperature $\Delta T$ is increased and then the start request temperature Tsa is set. Thus, it is possible to issue a request for starting the engine 42 at an appropriate timing.

On the other hand, in the air conditioner 10, the outlet air temperature Ta, at which a request for starting the engine 42 is issued, is determined using the lower one of the start request temperature Tso set on the basis of the outside air temperature To and the start request temperature Tsa set on the basis of the maximum outlet air temperature Tamax as the reference temperature Taf. Thus, it is possible to suppress a situation in which the engine 42 is started before the outlet air temperature Ta decreases to thereby extend a duration during which the engine 42 is stopped.

Hence, when the passenger compartment is heated, the air conditioner 10 is able to improve fuel economy of the engine 42 and to reduce noise and emissions while reliably preventing a passenger from feeling uncomfortable.

Note that the above described present embodiment does not intend to limit the configuration of the aspects of the invention. For example, in the present embodiment, a coolant is circulated by the water pump 48 that is driven by the engine 42. Instead, a water pump that is driven by an electric motor (hereinafter, referred to as motor pump) may also be used.

In this case, when the engine 42 is stopped, the motor pump is driven so that the coolant is circulated at a flow rate corresponding to a request from the air conditioner ECU 50. Thus, it is possible to suppress a decrease in outlet air temperature Ta to extend a duration during which the engine 42 is stopped.

In addition, it is also applicable that circulation of the coolant is stopped immediately after the engine is stopped, and, when the outlet air temperature Ta decreases, first, the motor pump is driven to start circulation of the coolant to perform heating operation using the coolant of which the temperature is maintained inside the engine 42, and then a request for starting the engine 42 is issued on the basis of the outlet air temperature Ta.

In addition, both the water pump 48 and the motor pump may be used to circulate the coolant. In this case, for example, the coolant may be circulated to the heater core 38 by the motor pump or the coolant may be circulated by the motor pump instead of the water pump 48 while the engine 42 is stopped.

In addition, the present embodiment describes an example in which the air conditioner 10 that is able to perform cooling operation is employed as the vehicle heating system. Instead, the vehicle heating system to which the aspects of the invention are applied may be a configuration that does not have a cooling function.

**Claims**

1. A vehicle heating system provided for a vehicle that is equipped with an internal combustion engine (42) as a driving source for driving the vehicle and that includes internal combustion engine control means (64) that stops the internal combustion engine when a predetermined stop condition is satisfied and starts the internal combustion engine when a start condition is satisfied or on the basis of a start request, wherein the vehicle heating system blows out heating air, heated using a coolant of the internal combustion engine, through an air outlet port (30, 32, 34) to heat a passenger compartment, the vehicle heating system comprising:

   outlet air temperature detecting means (68) that detects an outlet air temperature, which is a temperature of the heating air that blows out through the air outlet port (30, 32, 34); and start request means (50) that issues the start request for starting the internal combustion engine, **characterized in that** said vehicle heating system comprises first setting means (50) that detects an outlet air temperature using the outlet air temperature detecting means at least at the time when the internal combustion engine stops, and that sets a first reference temperature (Tsa) that is lower by a predetermined allowable temperature ($\Delta$T) than the detected outlet air temperature; and **in that** said

   start request means (50) issues the start request for starting the internal combustion engine to the internal combustion engine control means (68) when the outlet air temperature detected while the internal combustion engine is stopped is lower than the set first reference temperature (Tsa).

2. The vehicle heating system according to claim 1, further comprising:

   outside air temperature detecting means (56) that detects an outside air temperature, which is a temperature outside the vehicle; and
   second setting means (50) that sets a second reference temperature (Tso) on the basis of the detected outside air temperature, wherein
   the start request means (50) issues the start request for starting the internal combustion engine when the detected outlet air temperature is lower than the lower one of the first reference temperature (Tsa) and the second reference temperature (Tso).

3. The vehicle heating system according to claim 1 or 2, wherein
   the first setting means (50) sets the first reference temperature (Tsa) on the basis of a maximum outlet air temperature (Tamax), which is a maximum temperature of the detected outlet air temperature during a period in which the internal combustion engine is stopped, including the time when the internal combustion engine stops.

4. The vehicle heating system according to any one of claims 1 to 3, wherein
   the first setting means (50) sets the first reference temperature (Tsa) so that the allowable temperature ($\Delta$T) is

increased as the outlet air temperature (Ta) used for setting the first reference temperature (Tsa) increases.

5. The vehicle heating system according to any one of claims 1 to 4, wherein
the outlet air temperature detecting means (68) detects a temperature of the heating air that blows out through a foot air outlet port (34) that is open toward feet of a passenger.

6. The vehicle heating system according to any one of claims 1 to 5, further comprising:

a heater core (38) that is provided upstream of the outlet air temperature detecting means (68) to heat the heating air, wherein
the heater core (38) is heated by the coolant of the internal combustion engine (42) circulated to the heater core (38), and
the heater core (38) is provided downstream of the internal combustion engine in a circuit of the coolant.

7. A method of heating a passenger compartment by blowing out heating air, heated by a coolant of an internal combustion engine, through an air outlet port (30, 32, 34), wherein the internal combustion engine is stopped when a predetermined stop condition is satisfied, and the internal combustion engine is started when a start condition is satisfied or on the basis of a start request, the method comprising the steps of:

detecting an outlet air temperature, which is a temperature of the heating air that blows out through the air outlet port (30, 32, 34) (S130);
detecting the outlet air temperature at least at the time when the internal combustion engine stops and then setting a first reference temperature (Tsa) that is lower by a predetermined allowable temperature (ΔT) than the detected outlet air temperature (S118); and
issuing the start request for starting the internal combustion engine when the outlet air temperature detected while the internal combustion engine is stopped is lower than the set first reference temperature (Tsa) (S126).

**Patentansprüche**

1. Fahrzeugheizsystem für ein Fahrzeug, welches mit einer Brennkraftmaschine (42) als eine Antriebsquelle zum Antrieb des Fahrzeugs ausgestattet ist und eine Brennkraftmaschinensteuereinrichtung (64) aufweist, welche die Brerinkraftmaschine stoppt, wenn eine vorbestimmte Stoppbedingung erfüllt ist, und die Brennkraftmaschine startet, wenn eine Startbedingung erfüllt ist oder auf der Grundlage einer Startanforderung, wobei das Fahrzeugheizsystem Heizluft, welche mit Hilfe eines Kühlmittels der Brennkraftmaschine aufgeheizt wird, durch eine Luftauslassöffnung (30, 32, 34) nach außen bläst, um einen Fahrgastraum aufzuheizen, wobei das Fahrzeugheizsystem aufweist:

eine Auslasslufttemperaturerfassungseinrichtung (68), welche eine Auslasslufttemperatur erfasst, welches eine Temperatur der Heizluft ist, welche durch die Luftauslassöffnung (30, 32, 34) heraus bläst; und
eine Startanforderungseinrichtung (50), welche die Startanforderung zum Starten der Brennkraftmaschine ausgibt, **dadurch gekennzeichnet, dass**
das Fahrzeugheizsystem eine erste Einstelleinrichtung (50) aufweist, welche eine Auslasslufttemperatur mit Hilfe der Auslasslufttemperaturerfassungseinrichtung zumindest zu einem Zeitpunkt erfasst, wenn die Brennkraftmaschine gestoppt ist, und eine erste Referenztemperatur (Tsa) einstellt, welche um eine vorbestimmte zulässige Temperatur (ΔT) geringer als die erfasste Auslasslufttemperatur ist; wobei
die Startanforderungseinrichtung (50) die Startanforderung zum Starten der Brennkraftmaschine an die Brennkraftmaschinensteuereinrichtung (68) ausgibt, wenn die Auslasslufttemperatur, welche erfasst wird, während die Brennkraftmaschine gestoppt ist, niedriger als die eingestellte erste Referenztemperatur (Tsa) ist.

2. Fahrzeugheizsystem gemäß Anspruch 1, welche ferner aufweist:

eine Außenlufttemperaturerfassungseinrichtung (56), welche eine Außenlufttemperatur erfasst, welche eine Temperatur außerhalb des Fahrzeugs ist; und
eine zweite Einstelleinrichtung (50), welche eine zweite Referenztemperatur (Tso) auf der Basis der erfassten Außenlufttemperatur einstellt, wobei
die Startanforderungseinrichtung (50) die Startanforderung zum Starten der Brennkraftmaschine ausgibt, wenn die erfasste Auslasslufttemperatur niedriger als die niedrigere von der ersten Referenztemperatur (Tsa) und der zweiten Referenztemperatur (Tso) ist.

3. Fahrzeugheizsystem gemäß Anspruch 1 oder 2, wobei die erste Einstelleinrichtung (50) die erste Referenztemperatur (Tsa) auf der Basis einer maximalen Auslasslufttemperatur (Tamax) einstellt, welche eine maximale Temperatur der erfassten Auslasslufttemperatur während einer Zeitdauer ist, in der die Brennkraftmaschine gestoppt ist, einschließlich der Zeit, wenn die Brennkraftmaschine stoppt.

4. Fahrzeugheizsystem gemäß einem der Ansprüche 1 bis 3, wobei die erste Einstelleinrichtung (50) die erste Referenztemperatur (Tsa) so einstellt, dass die zulässige Temperatur ($\Delta$T) mit Zunahme der für die Einstellung der ersten Referenztemperatur (Tsa) verwendeten Auslasslufttemperatur (Ta) ansteigt.

5. Fahrzeugheizsystem gemäß einem der Ansprüche 1 bis 4, wobei die Auslasslufttemperaturerfassungseinrichtung (68) eine Temperatur der Heizluft erfasst, welche durch eine Fußluftauslassöffnung (34), die sich zu den Füßen eines Fahrgasts hin öffnet, heraus bläst.

6. Fahrzeugheizsystem gemäß einem der Ansprüche 1 bis 5, welches ferner aufweist:

   einen Heizkörper (38), welcher stromaufwärts der Auslasslufttemperaturerfassungseinrichtung (68) vorgesehen ist, um die Heizluft aufzuheizen, wobei
   der Heizkörper (38) durch das Kühlmittel der Brennkraftmaschine (42) aufgeheizt wird, welches dem Heizkörper (38) zugeführt wird, und
   der Heizkörper (38) stromabwärts der Brennkraftmaschine in einem Kühlmittelkreislauf angeordnet ist.

7. Verfahren zum Heizen eines Fahrgastraums durch Ausblasen von Heizluft, welche durch ein Kühlmittel einer Brennkraftmaschine aufgeheizt wird, durch eine Luftauslassöffnung (30, 32, 34), wobei die Brennkraftmaschine gestoppt wird, wenn eine vorbestimmte Stoppbedingung erfüllt ist, und die Brennkraftmaschine gestartet wird, wenn eine Startbedingung erfüllt ist oder auf der Grundlage einer Startanforderung, wobei das Verfahren die Schritte aufweist:

   Erfassen einer Auslasslufttemperatur, welche eine Temperatur der Heizluft ist, die durch die Luftauslassöffnung (30, 32, 34) heraus bläst (S130);
   Erfassen der Auslasslufttemperatur zumindest zu einem Zeitpunkt, wenn die Brennkraftmaschine gestoppt ist, und anschließendes Einstellen einer ersten Referenztemperatur (Tsa), welche um eine vorbestimmte zulässige Temperatur ($\Delta$T) geringer als die erfasste Auslasslufttemperatur ist (S118); und
   Ausgeben der Startanforderung zum Starten der Brennkraftmaschine, wenn die Auslasslufttemperatur, welche erfasst wird, während die Brennkraftmaschine gestoppt ist, niedriger als die eingestellte erste Referenztemperatur (Tsa) ist (S126).

**Revendications**

1. Système de chauffage de véhicule prévu pour un véhicule qui est équipé avec un moteur à combustion interne (42) comme source d'entraînement pour entraîner le véhicule et qui comporte un moyen (64) de commande du moteur à combustion interne qui arrête le moteur à combustion interne lorsqu'une condition d'arrêt prédéterminée est satisfaite et démarre le moteur à combustion interne lorsqu'une condition de démarrage est satisfaite ou sur la base d'une demande de démarrage, où le système de chauffage de véhicule délivre en sortie de l'air de chauffage, chauffé en utilisant un liquide de refroidissement du moteur à combustion interne, à travers un orifice (30, 32, 34) de sortie d'air pour chauffer un compartiment passager, le système de chauffage de véhicule comprenant :

   un moyen (68) de détection d'une température de l'air de sortie qui détecte une température de l'air de sortie, qui est une température de l'air de chauffage qui sort par l'orifice (30, 32, 34) de sortie d'air ; et un moyen (50) de demande de démarrage qui émet la demande de démarrage pour démarrer le moteur à combustion interne, **caractérisé en ce que** ledit système de chauffage de véhicule comprend un premier moyen de réglage (50) qui détecte une température de l'air de sortie en utilisant le moyen de détection d'une température de l'air de sortie au moins au moment où le moteur à combustion interne s'arrête, et qui règle une première température de référence (Tsa) qui est inférieure par une température admissible prédéterminée ($\Delta$T) à la température de l'air de sortie détectée ; et **en ce que**
   le moyen (50) de demande de démarrage émet la demande de démarrage pour démarrer le moteur à combustion interne au moyen (68) de commande du moteur à combustion interne lorsque la température de l'air de sortie détectée tandis que le moteur à combustion interne est à l'arrêt est inférieure à la première température de référence réglée (Tsa).

**2.** Système de chauffage de véhicule selon la revendication 1, comprenant en outre:

un moyen (56) de détection d'une température de l'air extérieur qui détecte une température de l'air extérieur, qui est une température à l'extérieur du véhicule; et
un deuxième moyen de réglage (50) qui règle une deuxième température de référence (Tso) sur la base de la température de l'air extérieur détectée, où
le moyen (50) de demande de démarrage émet la demande de démarrage pour démarrer le moteur à combustion interne lorsque la température de l'air extérieur détectée est inférieure à la température la plus basse parmi la première température de référence (Tsa) et la deuxième température de référence (Tso).

**3.** Système de chauffage de véhicule selon la revendication 1 ou 2, dans lequel
le premier moyen de réglage (50) règle la première température de référence (Tsa) sur la base d'une température maximale de l'air de sortie (Tamax), qui est une température maximale de la température détectée de l'air de sortie durant une période pendant laquelle le moteur à combustion interne est à l'arrêt, y compris le moment où le moteur à combustion interne s'arrête.

**4.** Système de chauffage de véhicule selon l'une quelconque des revendications 1 à 3, dans lequel
le premier moyen de réglage (50) règle la première température de référence (Tsa) de sorte que la température admissible ($\Delta T$) augmente à mesure que la température de l'air de sortie (Ta) utilisée pour régler la première température de référence (Tsa) augmente.

**5.** Système de chauffage de véhicule selon l'une quelconque des revendications 1 à 4, dans lequel
le moyen (68) de détection d'une température de l'air de sortie détecte la température de l'air de chauffage qui sort à travers un orifice (34) de sortie d'air au niveau des pieds qui donne vers les pieds d'un passager.

**6.** Système de chauffage de véhicule selon l'une quelconque des revendications 1 à 5, comprenant en outre:

un radiateur (38) de chauffage qui est prévu en amont du moyen (68) de détection d'une température de l'air de sortie pour chauffer l'air de chauffage, où
le radiateur (38) est chauffé par le liquide de refroidissement du moteur à combustion interne (42) circulé vers le radiateur (38), et
le radiateur (38) est prévu en aval du moteur à combustion interne dans un circuit du liquide de refroidissement.

**7.** Procédé pour chauffer un compartiment passager en délivrant en sortie de l'air de chauffage, chauffé par un liquide de refroidissement d'un moteur à combustion interne, à travers un orifice (30, 32, 34) de sortie d'air, où le moteur à combustion interne est arrêté lorsqu'une condition d'arrêt prédéterminée est satisfaite, et le moteur à combustion interne est démarré lorsqu'une condition de démarrage est satisfaite ou sur la base d'une demande de démarrage, le procédé comprenant les étapes qui consistent à:

détecter une température de l'air de sortie, qui est une température de l'air de chauffage qui sort à travers l'orifice (30, 32, 34) de sortie d'air (S130);
détecter la température de l'air de sortie au moins au moment où le moteur à combustion interne s'arrête et régler ensuite une première température de référence (Tsa) qui est inférieure par une température admissible prédéterminée ($\Delta T$) à la température détectée de l'air de sortie (S118) ; et
émettre la demande de démarrage pour démarrer le moteur à combustion interne lorsque la température détectée de l'air de sortie tandis que le moteur à combustion interne est à l'arrêt est inférieure à la première température de référence réglée (Tsa) (S126).

F I G . 1

# FIG.2

# F I G . 3

# FIG.4A

```
      ┌────────────────────────────┐
      │  MAINTAINING HEATING POWER  │
      │    (ENGINE START REQUEST)   │
      └────────────────────────────┘
```

DETECT OUTSIDE AIR TEMPERATURE $T_O$
(SET OUTSIDE AIR TEMPERATURE FLAG $F_{TO}$) ~100

OUTSIDE
AIR TEMPERATURE
DETERMINATION
$F_{TO} = 1$ ?  102   NO

YES

SET START REQUEST COOLANT
TEMPERATURE $C_W$ BASED ON OUTSIDE
AIR TEMPERATURE  ~104

DETECT COOLANT TEMPERATURE $T_W$  ~106

COOLANT
TEMPERATURE DETERMINATION
$T_W < C_W$ ?  108   NO

YES

IS ENGINE
STOPPED (DURING ECONOMY
RUNNING) ?  110   NO

YES

IS BLOWER ON
(DURING AIR CONDITIONING
OPERATION OR DURING
HEATING) ?  112   NO

YES

( 1 )                              ( 2 )

# FIG.4B

① ②

```
LOAD MAXIMUM OUTLET
AIR TEMPERATURE Tamax              ~114

SET START REQUEST TEMPERATURE Tso
BASED ON OUTSIDE AIR TEMPERATURE To   ~116

SET START REQUEST TEMPERATURE Tsa
BASED ON MAXIMUM OUTLET AIR        ~118
TEMPERATURE Tamax

SET REFERENCE TEMPERATURE Taf
Taf = min(Tso,Tsa)                 ~120

DETECT OUTLET AIR TEMPERATURE Ta   ~122
```

124

START
REQUEST DETERMINATION          NO
(Ta < Taf ?)

YES

REQUEST ENGINE ECU FOR ENGINE START   ~126

RETURN

# FIG.5

SETTING MAXIMUM OUTLET
AIR TEMPERATURE

DETECT OUTLET AIR TEMPERATURE Ta ⎯⎯ 130

132
IS ENGINE
STOPPED (IS ECONOMY RUNNING
STARTED) ? — NO

YES

SET OUTLET AIR TEMPERATURE Ta AT
MAXIMUM OUTLET AIR TEMPERATURE Tamax ⎯⎯ 134
(Tamax = Ta)

DETECT OUTLET AIR TEMPERATURE Ta ⎯⎯ 136

138
IS OUTLET
AIR TEMPERATURE Ta
HIGHER THAN MAXIMUM OUTLET AIR
TEMPERATURE Tamax?
(Ta > Tamax) — YES

NO

140
IS ENGINE
STARTED (IS ECONOMY
RUNNING ENDED) ?

NO

YES

RETURN

# FIG. 6A

OUTSIDE AIR TEMPERATURE FLAG $F_{To}$

1

0

$T_{O2}$   $T_{O1}$   (°C)

OUTSIDE AIR TEMPERATURE To

# FIG. 6B

(°C)

(HIGH)

START REQUEST COOLANT TEMPERATURE $C_w$

ENGINE STOP PERMISSION REGION

(LOW)

(LOW)   (HIGH)   (°C)

OUTSIDE AIR TEMPERATURE To

# F I G . 7

# F I G . 8A

Chart with y-axis labeled "START REQUEST TEMPERATURE Tso (°C)" and x-axis labeled "OUTSIDE AIR TEMPERATURE To (°C)". Y-axis values Ca2, Ca3, Ca1. X-axis values To4, To5, To3. Labeled "ENGINE STOP PERMISSION REGION".

# F I G . 8B

Chart with y-axis labeled "START REQUEST TEMPERATURE Tsa (°C)" from (LOW) to (HIGH) and x-axis labeled "MAXIMUM OUTLET AIR TEMPERATURE Tamax" from (LOW) to (HIGH) (°C).

**EP 2 098 392 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1571022 A
- JP 1223013 A
- JP 10246131 A
- JP 2001263123 A
- JP 2002211238 A
- JP 2001341515 A